# EUROPEAN PATENT APPLICATION

(11) **EP 4 535 463 A1**
(43) Date of publication of application: **09.04.2025**
(21) Application number: 24204604.3
(22) Date of filing: 04.10.2024
(51) Int. Cl.: H01M 4/36, H01M 4/505, H01M 4/525, H01M 10/0525

(54) **POSITIVE ELECTRODE ACTIVE MATERIAL AND LITHIUM SECONDARY BATTERY COMPRISING THE SAME**

(30) Priority: 06.10.2023 KR 20230133213
(71) Applicant: ECOPRO BM CO., LTD., Cheongju-si, Chungcheongbuk-do 28116 (KR)
(72) Inventor: JUNG, Hyun Su, 28116 Cheongju-si, Chungcheongbuk-do (KR); LIM, Ra Na, 28116 Cheongju-si, Chungcheongbuk-do (KR); LIM, Kyung Min, 28116 Cheongju-si, Chungcheongbuk-do (KR); JEON, Se Hyeon, 28116 Cheongju-si, Chungcheongbuk-do (KR)
(74) Representative: Vossius & Partner Patentanwälte Rechtsanwälte mbB

(57) **Abstract**

The present invention relates to a positive electrode active material and a lithium secondary battery including the same, and more particularly, to a positive electrode active material including an overlithiated lithium manganese-based oxide, which can improve the electrochemical properties of a lithium secondary battery including discharge capacity and rate performance, which are reduced by lithium and manganese present in excess in the lithium manganese-based oxide, and a lithium secondary battery including the same.

## Description

### BACKGROUND

### 1. Field of the Invention

The present invention relates to a positive electrode active material and a lithium secondary battery including the same, and more particularly, to a positive electrode active material including an overlithiated lithium manganese-based oxide, which can improve the electrochemical properties of a lithium secondary battery, including discharge capacity and rate performance, which are reduced by lithium and manganese present in excess in the lithium manganese-based oxide, and a lithium secondary battery including the same.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or a mixed oxide comprising two or more of Ni, Co, Mn or Al.

Among the positive electrode active materials, LiCoO₂ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while an LiNiO₂-based positive electrode active material exhibits a battery characteristic such as high discharge capacity, due to cation mixing between Li and a transition metal, it is difficult to synthesize the LiNiO₂-based positive electrode active material, thereby causing a big problem in rate performance.

In addition, depending on the intensity of such cation mixing, a large amount of Li by-products is generated. Most of the Li by-products include LiOH and Li₂CO₃, may cause gelation in the preparation of a positive electrode paste, or cause gas generation due to repeated charging/discharging after the manufacture of an electrode. In addition, residual Li₂CO₃ among the Li by-products increases cell swelling to act as a cause of degrading lifetime characteristics.

Various candidate materials for compensating for these shortcomings of conventional positive electrode active materials are being proposed.

In one example, there is on-going research to use an overlithiated lithium manganese-based oxide in which an excess of Mn among transition metals is included and a lithium molar content is higher than the sum of the molar contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to the excessive amount of Mn contained in the oxide, electrical conductivity is relatively low, and thus the rate performance of a lithium secondary battery using OLO are low. As such, when the rate performance is low, there is a problem in that charge/discharge capacity and lifetime efficiency (capacity retention) are degraded during the cycling of a lithium secondary battery.

To solve the above-described problems, although various studies on changing the composition of OLO have been conducted, such attempts have not yet reached the level of commercialization.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using lithium iron phosphate (LFP) have mainly been used, but recently, the use of a nickel-based lithium composite oxide having a larger energy capacity per weight than LFP is increasing (of course, relatively inexpensive LFP is still used to reduce costs).

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only subject to unstable supply, but also excessively expensive compared to other raw materials, a positive electrode active material with a new composition, which can reduce a cobalt content or exclude cobalt is needed.

Considering these circumstances, although an overlithiated lithium manganese-based oxide can meet the above-mentioned expectations of the market, there is a limitation that the electrochemical properties of the lithium manganese-based oxide are still insufficient to replace a commercially available positive electrode active material such as a ternary lithium composite oxide with a nickel-cobalt-manganese (NCM) or nickel-cobalt-aluminum (NCA) composition.

For example, the present inventors confirmed that in the case of lithium manganese-based oxide, the possibility of transition metals being eluted from the particle surface is high as charging/discharging is repeated, compared to a ternary lithium composite oxide. In particular, there is a high possibility that Mn contained in excess in the lithium manganese-based oxide will be eluted from the particle surface.

When a transition metal is eluted from the lithium manganese-based oxide, the eluted transition metal reacts with an electrolyte at the surface of the lithium manganese-based oxide, and thus impurities may be formed. These impurities not only increase the surface resistance of the lithium manganese-based oxide, but also reduce the intercalation/deintercalation efficiency of lithium ions through the lithium manganese-based oxide.

The transition metal eluted from the lithium manganese-based oxide or impurities formed by reactions of the eluted transition metal and an electrolyte may move to the negative electrode using the electrolyte as a medium and may be deposited on the surface of the negative electrode.

For example, due to side reactions with the electrolyte occurring on the surface of the lithium manganese-based oxide or structural changes (changes in crystal structure, etc.) of the lithium manganese-based oxide, Mn²⁺ included in excess in the lithium manganese-based oxide may be eluted into the electrolyte. Mn²⁺ eluted into the electrolyte may move to the surface of the negative electrode using the electrolyte as a medium during formation or charging/discharging and react with various substances (electrons, electrolytes, electrodes, or by-products, etc.) present in a battery, and as a result, impurities including Mn²⁺, Mn metal, or Mn-containing compounds (such as MnCO₃, MnO, MnF₂, etc.) are present on the surface of the negative electrode.

Transition metals or impurities deposited on the surface of the negative electrode may rapidly increase the resistance of the negative electrode, and this resistance anomaly is a major cause of accelerated deterioration of the lifetime of lithium secondary batteries.

Lithium secondary batteries using the lithium manganese-based oxide as a positive electrode active material are vulnerable to the above-described problems because they have a higher operating voltage compared to lithium secondary batteries using a commercially available ternary lithium composite oxide as a positive electrode active material.

However, there is still no technology for addressing the elution of transition metals from overlithiated lithium manganese-based oxides and the resulting problems.

As described above, compared to other types of commercially available positive electrode active materials, existing overlithiated lithium manganese-based oxides are disadvantageous in terms of electrochemical properties and/or stability. However, the present inventors confirmed that when a coating layer with a specific composition (such as a boron-containing coating layer) is formed on the surface of the lithium manganese-based oxide, it is possible to suppress or mitigate the elution of transition metals from the surface of the lithium manganese-based oxide.

However, it was confirmed that as described above, when a coating layer with a specific composition is formed on the lithium manganese-based oxide, although the elution of transition metals from the surface of the lithium manganese-based oxide may be suppressed or mitigated, the rate performance of a lithium secondary battery using the lithium manganese-based oxide as a positive electrode active material tends to decrease.

Therefore, the present invention is directed to providing a positive electrode active material, which forms a coating layer to suppress or mitigate the elution of transition metals from the surface of the lithium manganese-based oxide and due to the coating layer, prevents or mitigates a decrease in the lifetime characteristics of a lithium secondary battery using the lithium manganese-based oxide as a positive electrode active material.

Specifically, the present invention is directed to providing a positive electrode active material which improves the discharge capacity and charge/discharge efficiency reduced by lithium and manganese present in excess in the lithium manganese-based oxide by forming a coating including fluorine and boron on at least a part of the surface of the lithium manganese-based oxide.

The present invention is also directed to providing a positive electrode active material, which improves the rate performance and lifetime efficiency of the lithium manganese-based oxide by controlling the contents of fluorine and boron in a coating formed on at least a part of the surface of the lithium manganese-based oxide.

The present invention is also directed to providing a positive electrode including a positive electrode current collector and a positive electrode active material layer formed on the positive electrode current collector, wherein the positive electrode active material layer includes the positive electrode active material defined herein.

In addition, the present invention is directed to providing a lithium secondary battery, which prevents a decrease in rate performance and capacity due to lithium and manganese present in excess in an existing OLO by using the positive electrode defined herein and in particular, achieves high stability by reducing the side reactions between the positive electrode active material and an electrolyte under a high voltage storage or operating condition due to a coating formed on the surface of the lithium manganese-based oxide.

In order to solve the above-described technical problems, according to an aspect of the present invention, there is provided a positive electrode active material, which includes a lithium manganese-based oxide in which a phase belonging to a C2/m space group and a phase belonging to a R3-m space group are dissolved. The lithium manganese-based oxide in which a phase belonging to a C2/m space group and a phase belonging to a R3-m space group are dissolved can also be described as a lithium manganese-based oxide comprising both a phase belonging to a C2/m space group and a phase belonging to a R3-m space group. The lithium manganese-based oxide comprises preferably at least 30 volume-%, more preferably at least 50 volume-%, even more preferably at least 70 volume-% (such as at least 80, at least 90 or even at least 95 volume-%) in total of a phase belonging to a C2/m space group and a phase belonging to a R3-m space group. The ratio of the phase belonging to a C2/m space group and a phase belonging to a R3-m space group can be calculated through the composition ratio of lithium and transition metal in the lithium manganese-based oxide.

Generally, in a commercially available ternary lithium composite oxide with a nickel-cobalt-manganese (NCM) or nickel-cobalt-aluminum (NCA) composition, the phase belonging to the R3-m space group is present as a single phase, whereas, in the overlithiated lithium manganese-based oxide defined herein, a phase belonging to a C2/m space group and a phase belonging to an R3-m space group are dissolved therein.

In addition, a coating including fluorine and boron may be formed on at least a part of the surface of the lithium manganese-based oxide.

The lithium manganese-based oxide, which is one of the components constituting the positive electrode active material, may be present as secondary particles in which a plurality of primary particles are aggregated. At least one selected from fluorine and boron may have a concentration gradient that decreases from the surface of the secondary particles toward the center of the secondary particles.

In an embodiment of the present invention, the coating may include one or more coating layers, including a coating layer comprising both fluorine and boron. In another embodiment of the present invention, the coating may include (1) a first coating layer formed at least a part of the surface of the lithium manganese-based oxide and including fluorine and (2) a second coating layer formed at least a part of the surface of the first coating layer and including boron. In another embodiment of the present invention, the coating may include (1) a first coating layer formed on at least a part of the surface of the lithium manganese-based oxide and including boron and (2) a second coating layer formed on at least a part of the surface of the first coating layer and including fluorine.

In an embodiment of the present invention, the lithium manganese-based oxide may be represented by Chemical Formula 1 below.

[Chemical Formula 1] Li(LiₐM1ₓM2_{y})O_{2-b}X_{b}

wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, wherein M2 does not overlap M1,
X is a halogen capable of replacing at least some of the oxygen present in the lithium manganese-based oxide, and
0<a≤0.7, 0≤b≤0.1, 0<x≤1, 0≤y<1, 0<x+y≤1.

In another embodiment of the present invention, the lithium manganese-based oxide may be represented by Chemical Formula 1-1 below.

[Chemical Formula 1-1] rLi₂MnO_{3-c}X'_{c}·(1-r)Li_{a'}M1_{x'}M2_{y'}O_{2-b'}X_{b'}

wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, wherein M2 does not overlap M1,
X and X' each are independently halogens capable of replacing at least some of the oxygen present in the lithium manganese-based oxide, and
0<r≤0.7, 0≤c≤0.1, 0<a'≤1, 0≤b'≤0.1, 0<x'≤1, 0≤y'< 1, 0<x'+y'≤1.

According to another aspect of the present invention, there is provided a positive electrode including a positive electrode current collector and a positive electrode active material layer formed on the positive electrode current collector. The positive electrode active material layer includes the positive electrode active material defined herein.

According to still another aspect of the present invention, there is provided a lithium secondary battery including the positive electrode defined herein, a negative electrode, a separator interposed between the positive electrode and the negative electrode, and an electrolyte.

### DETAILED DESCRIPTION OF EXEMPLARY EMBODIMENTS

For easier understanding of the present invention, certain terms are defined herein for convenience. Unless otherwise defined herein, scientific and technical terms used in the present invention will have meanings generally understood by those skilled in the art. In addition, unless otherwise specified in the context, it should be understood that the singular includes the plural, and the plural includes the singular. Amounts or ratios indicated herein are molar amounts or molar ratios, unless otherwise specified in the context.

Hereinafter, a positive electrode active material, which includes an overlithiated lithium manganese-based oxide, and a lithium secondary battery including the positive electrode active material according to some embodiments of the present invention will be described in more detail.

### Positive electrode active material

According to one aspect of the present invention, a positive electrode active material including a lithium manganese-based oxide in which a phase belonging to a C2/m space group and a phase belonging to an R3-m space group are dissolved is provided.

The phase belonging to a C2/m space group and the phase belonging to a R3-m space group may be distinguished not only through the composition of each phase, but also by a peak specific to each phase during XRD analysis. For example, the specific peak for the phase belonging to a C2/m space group may appear in the area of 2θ=20.8±1 °, and the specific peak for the phase belonging to a R3-m space group may appear in the area of 2θ=18.6±1°.

As the lithium manganese-based oxide is a composite oxide in which a phase belonging to a C2/m space group and a phase belonging to a R3-m space group are dissolved, a phase belonging to a C2/m space group and a phase belonging to a R3-m space group coexist in the lithium manganese-based oxide. In other words, the lithium manganese-based oxide is a composite oxide comprising a phase belonging to a C2/m space group and a phase belonging to a R3-m space group. The phase belonging to a C2/m space group and the phase belonging to a R3-m space group can be considered to be dispersed in the remainder of the lithium manganese-based oxide. In addition, the lithium manganese-based oxide is different from a composite oxide having a spinel crystal structure belonging to an Fd-3m space group (e.g., LiMn₂O₄ or an oxide having a composition similar thereto).

The lithium manganese-based oxide includes at least lithium, manganese, and a transition metal other than manganese. Also, the lithium manganese-based oxide at least includes lithium, manganese, and a metal other than manganese. The metal may include at least one selected from nickel, cobalt, and aluminum. Thus, the term "transition metal" as used in the present invention includes aluminum. Furthermore, manganese in the present invention is typically not intended if the term "transition metal" is used. In addition, the lithium manganese-based oxide may include lithium, nickel, and manganese, and may optionally further include a transition metal other than nickel.

The lithium manganese-based oxide may also be referred to an overlithiated layered oxide (OLO) because the equivalent weight of lithium present in the lithium manganese-based oxide is larger than the sum of the equivalent weight of transition metals (generally, when the molar ratio (Li/Metal molar ratio) of lithium to all metal elements, other than lithium, in the lithium manganese-based oxide is larger than 1).

In addition, the lithium manganese-based oxide is also referred to an overlithiated layered oxide with excess manganese because the content of manganese present in the lithium manganese-based oxide is larger than the content of other transition metals.

Generally, considering that a commercially available ternary lithium composite oxide with a nickel-cobalt-manganese (NCM) or nickel-cobalt-aluminum (NCA) composition has a content of manganese among all metal elements, excluding lithium, of 20 mol% or less, the lithium manganese-based oxide has a relatively high proportion of manganese (e.g., 50 mol% or more, 52 mol% or more, 53 mol% or more, or 55 mol% or more) among all metal elements compared to the commercially-available ternary lithium composite oxide.

In addition, considering that a commercially-available ternary lithium composite oxide with a nickel-cobalt-manganese (NCM) or nickel-cobalt-aluminum (NCA) composition has a content of nickel among all metal elements, excluding lithium, of 60 mol% or more (80 mol% or more for the high-Ni type), the lithium manganese-based oxide has a relatively low proportion of nickel among all metal elements (e.g., less than 50 mol%, 48 mol% or less, 46 mol% or less, 45 mol% or less, 44 mol% or less, 42 mol% or less, or 40 mol% or less) compared to the commercially-available ternary lithium composite oxide.

There is also a difference in that the Li/Metal molar ratio measured from the lithium manganese-based oxide defined herein is larger than that of a ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. Meanwhile, the Li/Metal molar ratio of the lithium manganese-based oxide defined herein may be higher than 1, and preferably has a value ranging from 1.1 to 1.6, 1.1 to 1.5, 1.2 to 1.6, or 1.2 to 1.5. It is to be understood that the "metal" in "Li/Metal molar ratio" is a metal other than Li. Thus, the above "Li/Metal molar ratio" may also be referred to as "Li/(Metal other than Li) molar ratio".

Accordingly, the lithium manganese-based oxide used herein may be defined as a composite oxide in which the content of manganese among all metal elements, excluding lithium, is 50 mol% or more, preferably 60 mol% or more, or a composite oxide in which the content of manganese is 50 mol% or more, preferably 60 mol% or more, and the nickel content is less than 50 mol%, preferably 40 mol% or less, among all metal elements, excluding lithium.

In addition, the lithium manganese-based oxide used herein may be defined as a composite oxide in which a molar ratio of lithium to all metal elements, excluding lithium, is higher than 1, or ranges from 1.1 to 1.6, 1.1 to 1.5, 1.2 to 1.6, or 1.2 to 1.5, and the content of manganese among all metal elements, excluding lithium, is 50 mol% or more, or a composite oxide in which a molar ratio of lithium to all metal elements, excluding lithium, is higher than 1, or ranges from 1.1 to 1.6, 1.1 to 1.5, 1.2 to 1.6, or 1.2 to 1.5, the content of manganese is 50 mol% or more and the content of nickel is less than 50 mol%, among all metal elements, excluding lithium.

Despite the differences in composition described above, the lithium manganese-based oxide may also serve as a composite metal oxide capable of intercalation/deintercalation of lithium ions.

The lithium manganese-based oxide included in the positive electrode active material defined herein may be present as particles including at least one primary particle.

When the lithium manganese-based oxide is present as a single primary particle, the lithium manganese-based oxide may be referred to as a single particle. On the other hand, when the lithium manganese-based oxide is present as an aggregate in which a plurality of primary particles are aggregated, the lithium manganese-based oxide may be referred to as a secondary particle.

The positive electrode active material may include at least one selected from a lithium manganese-based oxide present as a single particle and a lithium manganese-based oxide present as a secondary particle in which a plurality of primary particles are aggregated.

The primary particle constituting the lithium manganese-based oxide may have a rod shape, an oval shape, and/or an irregular shape. In addition, unless specifically intended during the manufacturing process, primary particles having various shapes are present in the same positive electrode active material. In addition, the primary particle refers to a particle unit in which no grain boundary appears when the particle is observed at a magnification of 5,000 to 20,000 times using a scanning electron microscope.

The primary particle constituting the lithium manganese-based oxide defined herein may have an average particle diameter in the range of from 0.05 to 5 µm, 0.05 to 1.0 µm, 0.1 to 1.0 µm, or 0.25 to 0.75 µm. Here, the average particle diameter of the primary particles may be the average value of the length of the primary particle in the major axis direction and the length of the primary particle in the minor axis direction ([major axis length+minor axis length]/2). Also, the average particle diameter of the primary particle can be calculated as the average value of the particle diameters of all primary particles observed from the surface SEM image of the lithium manganese-based oxide.

When the average particle diameter of the primary particles is smaller than 0.05 µm, the lithium manganese-based oxide (secondary particles) consisting of the primary particles has a relatively large specific surface area. In this case, the possibility of side reactions between the lithium manganese-based oxide and an electrolyte solution may increase during the storage or operation of a lithium secondary battery.

On the other hand, when the average particle diameter of the primary particles is larger than 5 µm, as the growth of the primary particles is excessively induced, the diffusion path of lithium ions in the primary particle also becomes longer. When the diffusion path of lithium ions in the primary particle is excessively long, the mobility of lithium ions in the primary particle and the diffusivity of lithium ions mediated by the primary particle decrease, which becomes the cause of an increase in resistance of the lithium manganese-based oxide (secondary particles) composed of the primary particles.

Accordingly, in order to reduce the specific surface area of the lithium manganese-based oxide and prevent the mobility of lithium ions in the primary particles and the diffusivity of lithium ions via the primary particles from being reduced, the average particle diameter of the primary particles may be in the range of from 0.05 to 5 µm, 0.05 to 1.0 µm, 0.1 to 1.0 µm, or 0.25 to 0.75 µm.

When the lithium manganese-based oxide is present as secondary particles in which a plurality of primary particles are aggregated, the average particle diameter of the secondary particles may be in the range of from 0.5 to 15 µm, 1.0 to 15 µm, 2.0 to 15 µm, 3.0 to 15 µm, 4.0 to 15 µm, or 5.0 to 15 µm. The average particle diameter of the secondary particles may vary according to the number of primary particles constituting the secondary particle. The average particle diameter (D₅₀) of the secondary particles may be measured using a laser diffraction method. For example, after dispersing the secondary particles in a dispersion medium, introducing the same into a commercially available laser diffraction particle size measurement device (e.g., Microtrac MT 3000) and irradiating ultrasonic waves at about 28 kHz at an output of 60 W, a volume cumulative particle size distribution graph may be obtained, from which a particle size corresponding to 50% of the volume accumulation amount is obtained, and thus the average particle diameter (D₅₀) may be measured. The term "particle size" is used herein interchangeably with the term "particle diameter". Any particle diameter mentioned herein are median volume-based particle diameters as determined by laser diffraction, unless specified otherwise in the context.

Unless otherwise defined, the term "surface of the primary particle" used herein means the outer surface of the primary particle exposed to the outside. Likewise, the term "surface of the secondary particle" used herein refers to the outer surface of the secondary particle exposed to the outside. Here, the "surface of the secondary particle" formed by aggregating a plurality of primary particles correspond to the exposed surface of the primary particle present on the surface region of the secondary particle.

In addition, unless defined otherwise, the term "surface region of a particle" used herein refers to the area relatively close to the "outermost surface" of a particle, and the "center of a particle" refers to the area relatively closer to the "exact center" of a particle, compared to the "surface region." Accordingly, the "surface region of the primary particle" refers to the area relatively close to the "outermost surface" of the primary particle, and the "center of the primary particle" refers to the region relatively closer to the "exact center" of the primary particle, compared to the "surface region." Likewise, the "surface region of a secondary particle" refers to the region relatively close to the "outermost surface" of the secondary particle, and the "center of a secondary particle" refers to the area relatively closer to the "exact center" of the secondary particle, compared to the "surface region."

Here, the area excluding the "surface region of a particle" in any particle may be defined as the "center of a particle."

For example, when the radius of the primary particle is r, the area where the distance from the surface of the primary particle is 0 to 0.5r may be defined as the surface region of the primary particle, and the region where a distance from the exact center of the primary particle is 0 to 0.5r may be defined as the center of the primary particle. When the radius of the primary particle is 0.5 µm, the surface region of the primary particle is the region where the distance from the surface of the primary particle ranges from 0 to 0.25 µm, and the center of the primary particle may be defined as the region where the distance from the exact center of the primary particle ranges from 0 to 0.25 µm.

In addition, as needed, when the radius of the primary particle is r, the region in which the distance from the surface of the primary particle ranges from 0 to 0.1r or 0 to 0.2r is defined as the surface region of the primary particle, and the region in which the distance from the exact center of the primary particle ranges from 0 to 0.2r or 0 to 0.5r may be defined as the center of the primary particle.

Likewise, when the radius of the secondary particle is r, the area where the distance from the surface of the secondary particle ranges from 0 to 0.5r may be defined as the surface region of the secondary particle, and the region where a distance from the exact center of the secondary particle ranges from 0 to 0.5r may be defined as the center of the secondary particle. When the radius of the secondary particle is 2.0 µm, the surface region of the secondary particle is the region where the distance from the surface of the secondary particle ranges from 0 to 1.0 µm, and the center of the secondary particle may be defined as the region where the distance from the exact center of the secondary particle ranges from 0 to 1.0 µm.

In addition, as needed, when the radius of the secondary particle is r, the area where the distance from the surface of the secondary particle ranges from 0 to 0.1r or 0 to 0.2r may be defined as the surface region of the secondary particle, and the region where a distance from the exact center of the secondary particle ranges from 0 to 0.2r or 0 to 0.5r may be defined as the center of the secondary particle.

The lithium manganese-based oxide defined herein may be an overlithiated lithium manganese-based oxide represented by Chemical Formula 1 below. The composition represented by Chemical Formula 1 below may be the average composition that reflects the composition of a coating present on at least a part of the surface of the lithium manganese-based oxide.

[Chemical Formula 1] Li(LiₐM1ₓM2_{y})O_{2-b}X_{b}

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, wherein M2 does not overlap M1, X is a halogen that can replace at least some of the oxygen present in the lithium manganese-based oxide, 0<a≤0.7, 0≤b≤0.1, 0<x≤1, 0≤y<1, and 0<x+y≤1. It is to be understood that typically at least one of M1 and M2 (preferably M1) is an element other than manganese.

For the types of halogens that can be used as X, the periodic table can be referenced, and F, Cl, Br and/or I, and preferably, F may be used.

In another embodiment, the lithium manganese-based oxide may be represented by Chemical Formula 1-1 below. The composition represented by Chemical Formula 1-1 below may be the average composition that reflects the composition of a coating present on at least a part of the surface of the lithium manganese-based oxide.

[Chemical Formula 1-1] rLi₂MnO_{3-c}X'_{c}·(1-r)Li_{a'}M1_{x'}M2_{y'}O_{2-b}X_{b'}

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, M2 does not overlap M1, X and X' each are halogens that can independently replace at least some of the oxygen present in the lithium manganese-based oxide, 0<r≤0.7, 0≤c≤0.1, 0<a'≤1, 0≤b'≤0.1, 0<x'≤1, 0≤y'<1, and 0<x'+y'≤1. It is to be understood that typically at least one of M1 and M2 (preferably M1) is an element other than manganese.

For the types of halogens that can be used as X and X', the periodic table can be referenced, and F, Cl, Br and/or I, and preferably, F may be used.

When M1 in Chemical Formula 1 and Chemical Formula 1-1 is Ni, M2 may contain Mn, and when M1 is Mn, M2 may contain Ni. In addition, when M1 is Ni and Mn, M2 may not be present, or if present, M2 may be an element other than Ni and Mn.

That is, when M1 is Ni, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Mn.

When M1 is Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Ni.

When M1 is Ni and Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si.

The lithium manganese-based oxide represented by Chemical Formula 1 or Chemical Formula 1-1 may optionally include cobalt. When the lithium manganese-based oxide includes cobalt, the mole fraction of cobalt with respect to the mole number of all metal elements in the lithium manganese-based oxide may be 20% or less, preferably, 15% or less, and more preferably, 10% or less. In another case, the lithium manganese-based oxide may have a cobalt-free composition not containing cobalt.

The Li/Metal molar ratio measured from the lithium manganese-based oxide represented by Chemical Formula 1 or Chemical Formula 1-1 may be more than 1, in the range of from 1.1 to 1.6, 1.1 to 1.5, 1.2 to 1.6, or 1.2 to 1.5. It is possible to form an overlithiated lithium manganese-based oxide only when the Li/Metal molar ratio measured from the lithium manganese-based oxide has at least a value greater than 1. In addition, in order to properly form a solid solution in which a phase belonging to a C2/m space group and a phase belonging to a R3-m space group are dissolved, and at the same time, exhibit high capacity under a high voltage operating environment, the Li/Metal molar ratio of the lithium manganese-based oxide is preferably in the range of from 1.1 to 1.6, 1.1 to 1.5, 1.2 to 1.6, or 1.2 to 1.5.

In addition, to properly form a solid solution in which a phase belonging to a C2/m space group and a phase belonging to a R3-m space group are dissolved, the content of manganese among all metal elements, excluding lithium, in the lithium manganese-based oxide represented by Chemical Formula 1 or Chemical Formula 1-1 is preferably 50 mol% or more.

In order for the lithium manganese-based oxide to have the characteristics of OLO exhibiting high capacity under a high voltage operating environment, the content of manganese among all metal elements, excluding lithium, in the lithium manganese-based oxide may be 50 mol% or more and less than 80 mol%, 51 mol% or more and less than 80 mol%, 52 mol% or more and less than 80 mol%, 53 mol% or more and less than 80 mol%, 54 mol% or more and less than 80 mol%, 55 mol% or more and less than 80 mol%, in the range of from 50 mol% to 75 mol%, 51 mol% to 75 mol%, 52 mol% to 75 mol%, 53 mol% to 75 mol%, 54 mol% to 75 mol%, or 55 mol% to 75 mol%.

When the content of manganese in the lithium manganese-based oxide exceeds 80 mol%, a phase transition may occur due to the movement of transition metals (particularly manganese) in the lithium manganese-based oxide during formation and/or operation of the lithium secondary battery. The phase transition forms a spinel phase, and the spinel phase, which acts as an impurity in the lithium manganese-based oxide, may cause a decrease in charge/discharge capacity or voltage decay during the cycling of the lithium secondary battery. In addition, when the content of manganese in the lithium manganese-based oxide exceeds 80 mol%, it may be difficult to sufficiently generate a phase belonging to the R3-m space group.

To properly form a solid solution in which a phase belonging to a C2/m space group and a phase belonging to a R3-m space group are dissolved, the content of nickel among all metal elements, excluding lithium, present in the lithium manganese-based oxide represented by Chemical Formula 1 or Chemical Formula 1-1 may be less than 50 mol%, 48 mol% or less, 46 mol% or less, 45 mol% or less, 44 mol% or less, 42 mol% or less, or 40 mol% or less.

When the content of nickel in the lithium manganese-based oxide is 50 mol% or more, it may be difficult to sufficiently form a C2/m phase, or the phase belonging to a C2/m space group and the phase belonging to a R3-m space group may not form a sufficient solid solution, which may cause a phase separation during the formation and/or operation of the lithium secondary battery.

Generally, in the commercially-available ternary lithium composite oxide with a nickel-cobalt-manganese (NCM) or nickel-cobalt-aluminum (NCA) composition, the phase belonging to a R3-m space group is present as a single phase.

On the other hand, the overlithiated lithium manganese-based oxide represented by Chemical Formula 1 or Chemical Formula 1-1 is present as a composite oxide in which an oxide of a phase belonging to a C2/m space group represented by rLi₂MnO_{3-c}X'_{c} (hereinafter, referred to as 'C2/m phase') and an oxide of a phase belonging to a R3-m space group represented by (1-r)LiₐMlₓM2_{y}O_{2-b}X_{b} (hereinafter, referred to as 'R3-m phase') are dissolved. In the present invention, the fact that a phase belonging to a C2/m space group and a phase belonging to a R3-m space group are dissolved means that an oxide of a C2/m phase and an oxide of a R3-m phase are present in a solid solution.

Here, a composite oxide in which a phase belonging to a C2/m space group and a phase belonging to a R3-m space group are simply physically and/or chemically bonded or attached does not correspond to the solid solution defined therein.

For example, a composite oxide having a phase belonging to a C2/m space group whose surface is coated with a metal oxide with a phase belonging to a R3-m space group by mixing a metal oxide having a phase belonging to a C2/m space group and a metal oxide with a phase belonging to a R3-m space group does not correspond to the solid solution defined herein.

In the lithium manganese-based oxide represented by Formula 1, when r is more than 0.7, since the proportion of Li₂MnO_{3-b'}X'_{b'}, which is a C2/m phase oxide, in the lithium manganese-based oxide is excessively large, the irreversible capacity and resistance of the positive electrode active material increases, as a result, there is a risk that the discharge capacity may decrease. That is, to improve surface kinetics by sufficiently activating the C2/m-phase oxide with relatively high resistance in the lithium manganese-based oxide, the R3-m phase oxide is preferably present in a predetermined proportion or more.

In an embodiment of the present invention, a coating including fluorine and boron may be formed on at least a part of the surface of the lithium manganese-based oxide. When the lithium manganese-based oxide is present as secondary particles in which a plurality of primary particles are aggregated, the coating may cover at least a part of the surface(s) of the primary particles and/or the secondary particles. Due to the coating including fluorine and boron formed on the surface of the lithium manganese-based oxide, it is possible to reduce the side reactions with an electrolyte that occur on the surface of the lithium manganese-based oxide and mitigate and/or prevent a decrease in charge transfer and/or diffusivity (that is, surface kinetics) of lithium ions on the surface of the lithium manganese-based oxide.

The surface where adjacent primary particles in the secondary particles come into contact with each other may be referred to as the interface between the primary particles, and the interface between the primary particles may be defined as a grain boundary between the primary particles. The primary particles may be spaced apart from neighboring primary particles to form a void in the secondary particles.

The coating may be defined as an area in which fluorine and boron are present on the surface(s) of the primary particles and/or the secondary particles, and may be entirely or partially formed on the surface(s) of the primary particles and/or the secondary particles. When the coating layer is partially formed on the surface(s) of the primary particles and/or the secondary particles, the shape of the coating layer may be referred to as an island shape.

In addition, fluorine and boron may be present in a physically- and/or chemically-bound state in the form of a compound on the surface(s) of the primary particles and/or the secondary particles, or may be present in a partially dissolved state.

The coating present in the secondary particles may be formed as fluorine and boron diffuse from the surface region of the secondary particles toward the center of the secondary particles along the grain boundaries between the primary particles.

Specifically, a main compound constituting the coating (such as a fluorine-containing compound and/or a boron-containing compound) may be present in a diffused state from the surface region of the secondary particles toward the center of the secondary particles. In addition, as the coating diffuses from the surface region of the secondary particles toward the center of the secondary particles, an element (such as fluorine and/or boron) mainly included in the coating may have a concentration gradient that decreases from the surface region of the secondary particles to the center of the secondary particles.

In one embodiment of the present invention, the coating may include a fluorine-containing compound. A representative example of the fluorine-containing compound is LiF. LiF may be formed by a reaction of a fluorine-containing polymer and lithium impurities (such as LiOH and Li₂CO₃) present on the surface of the lithium manganese-based oxide. The reaction between the fluorine-containing polymer and lithium impurities may occur through heat treatment, and carbon in the fluorine-containing polymer may form a carbonaceous matrix (e.g., a carbonaceous structure formed by carbonization of carbon). The carbonaceous matrix may be formed as the fluorine-containing polymer is carbonized, and LiF may be present in a dispersed state in the carbonaceous matrix.

As a fluorine-containing compound such as LiF is formed in the coating, the content of lithium impurities present on the surface of the lithium manganese-based oxide may be reduced. In addition, due to the passivation effect caused by LiF formed on the surface of the lithium manganese-based oxide, electrolyte decomposition occurring on the surface of the lithium manganese-based oxide may be mitigated and/or suppressed.

The fluorine may be present in an amount of more than 100 ppm and 3,500 ppm or less, preferably in the range of from 150 ppm to 3,500 ppm, and more preferably in the range of from 150 ppm to 1,100 ppm, based on the total weight of the positive electrode active material. Unless explicitly indicated otherwise, the term "ppm" as used herein means "ppm by weight".

The fact that the fluorine is present in an amount of 100 ppm or less based on the total weight of the positive electrode active material means that LiF is not sufficiently formed on the surface of the lithium manganese-based oxide. In this case, it may be difficult to sufficiently reduce impurities on the surface of the lithium manganese-based oxide and to sufficiently protect the surface of the lithium manganese-based oxide. On the other hand, when the fluorine is present in an amount of more than 3,500 ppm based on the total weight of the positive electrode active material, the resistance of the lithium manganese-based oxide excessively increases, which may have a risk of reducing the overall electrochemical properties of a lithium secondary battery using the lithium manganese-based oxide as a positive electrode active material.

In an embodiment of the present invention, the coating may include a boron-containing compound. A representative example of the boron-containing compound may be B₂O₃, H_{α}B_{β}O_{γ} (0<α<10, 0<β<10, 0<γ<20), and Li_{α'}B_{β'}O_{γ'} (0<α'<10, 0<β'<10, 0<γ'<20).

The boron may be included in an amount of more than 50 ppm and 3,000 ppm or less, preferably in the range of from 100 ppm to 3,000 ppm, and more preferably in the range of from 100 ppm to 1300 ppm, based on the total weight of the positive electrode active material.

The fact that the boron is present in an amount of 50 ppm or less based on the total weight of the positive electrode active material means that the boron-containing compound is not sufficiently formed on the surface of the lithium manganese-based oxide. In this case, it may be difficult to sufficiently suppress the elution of transition metals from the lithium manganese-based oxide. On the other hand, when the boron is present in an amount of more than 3,000 ppm, the surface kinetics of the lithium manganese-based oxide or the electrical conductivity of the lithium manganese-based oxide may decrease. In addition, the amount of gas generated in the lithium secondary battery may be rapidly increased.

As described above, the fluorine-containing compound and the boron-containing compound included in the coating may form a gradient from the surface region of the secondary particles toward the center of the secondary particles, and the concentration gradient of the fluorine-containing compound and the boron-containing compound may act as a lithium ion diffusion path, that is, a two-dimensional and/or three-dimensional path(s) through which lithium ions diffuse in the lithium manganese-based oxide.

As the lithium ion diffusion path in the lithium manganese-based oxide is formed, the resistance to the movement of lithium ions mediated by the lithium manganese-based oxide may be reduced, and further, it may contribute to improving the rate performance of a lithium secondary battery using the lithium manganese-based oxide as a positive electrode active material.

In one embodiment of the present invention, the coating may include a single coating layer in which fluorine and boron coexist. In other words, the coating may contain one or more coating layers, wherein preferably at least one of these coating layers contains both fluorine and boron. In another embodiment of the present invention, the coating may include (1) a first coating layer formed on at least a part of the surface of the lithium manganese-based oxide and including fluorine and (2) a second coating layer formed on at least a part of the surface of the first coating layer and including boron. In still another embodiment of the present invention, the coating may include (1) a first coating layer formed on at least a part of the surface of the lithium manganese-based oxide and including boron and (2) a second coating layer formed on at least a part of the surface of the first coating layer and including fluorine. The first coating layer and the second coating layer each may be defined according to the order of forming the fluorine-containing coating layer and the boron-containing coating layer.

As defined herein, the coating may include fluorine and boron, specifically a fluorine-containing compound and a boron-containing compound.

The weight ratio of the fluorine and the boron calculated based on the total weight of the positive electrode active material may be in the range of from 1 :0.03 to 1:25, preferably in the range of from 1:1.2 to 1:25.

The fact that the weight ratio of boron to fluorine calculated based on the total weight of the positive electrode active material is more than 25 means that the fluorine content is excessively low compared to the boron content in the positive electrode active material, especially in the coating, or that the boron content is excessively high compared to the fluorine content. When the fluorine content in the coating is excessively low, it may be difficult to sufficiently reduce impurities on the surface of the lithium manganese-based oxide, and the effect of protecting the surface of the lithium manganese-based oxide may be insufficient. On the other hand, when the boron content in the coating is excessively high, the surface kinetics of the lithium manganese-based oxide or the electrical conductivity of the lithium manganese-based oxide may decrease.

The fact that the weight ratio of boron to fluorine calculated based on the total weight of the positive electrode active material is less than 0.03 means that the fluorine content is excessively high compared to the boron content in the positive electrode active material, especially the coating, or that the boron content is excessively low compared to the fluorine content. When the fluorine content in the coating is excessively high, the resistance of the lithium manganese-based oxide excessively increases, and thus the overall electrochemical properties of a lithium secondary battery using the lithium manganese-based oxide as a positive electrode active material may be reduced. On the other hand, when the boron content in the coating is excessively low, it is difficult to sufficiently suppress the elution of transition metals from the lithium manganese-based oxide, and thus the lifetime of a lithium secondary battery using the lithium manganese-based oxide as a positive electrode active material may be reduced.

The positive electrode active material of the present invention is preferably obtainable by a method comprising the steps of
(i) preparing hydroxide precursor particles having a chemical composition expressed by Ni₁₋ₘ₁Mnₘ₁(OH)₂, wherein 0.2≤m1≤0.9,
(ii) adding a composition containing water and a nickel salt to the particles, followed by drying, to obtain coated particles,
(iii) heat treating the coated particles at a temperature in the range of from 400 to 700°C,
(iv) mixing the heat-treated particles with a lithium compound at a molar ratio of Li to metals other than Li in the range of from 1 to 1.5,
(v) heat treating the mixture obtained in step (iv) at a temperature in the range of from 750 to 1050°C,
(vi) mixing the product of step (v) with a fluorine containing compound,
(vii) heat treating the mixture obtained in step (vi) at a temperature in the range of from 250 to 550°C, and
(viii) mixing the product of step (vii) with boric acid or a borate,
(ix) heat treating the mixture obtained in step (viii) at a temperature in the range of from 250 to 550°C, and
(x) optionally pulverizing.

Steps (vi) and (vii) may alternatively be performed after steps (viii) and (ix), as shown below:
(viii) mixing the product of step (v) with boric acid or a borate,
(ix) heat treating the mixture obtained in step (viii) at a temperature in the range of from 250 to 550°C,
(vi) mixing the product of step (ix) with a fluorine containing compound,
(vii) heat treating the mixture obtained in step (vi) at a temperature in the range of from 250 to 550°C.

Alternatively, steps (vi) to (ix) may be replaced by the following steps (n1) and (n2):
(n1) mixing the product of step (v) with boric acid or a borate and with a fluorine containing compound,
(n2) heat treating the mixture obtained in step (n1) at a temperature in the range of from 250 to 550°C.

The present invention relates also to the method of preparing a positive electrode active material which comprises the steps indicated above.

In step (i), the hydroxide precursor particles preferably have a chemical composition expressed by Ni₁₋ₘ₁Mnₘ₁(OH)₂, 0.4≤m1≤0.8, preferably 0.5≤m1≤0.7, more preferably 0.55≤m1≤0.65.

In step (ii), the nickel salt is preferably Ni(II)-sulfate. The composition preferably further contains an alkali metal hydroxide and/or ammonium hydroxide. The molar ratio of nickel added as a salt in step (ii) is preferably 3% to 10% relative to the chemical composition of hydroxide precursor particles. The drying is preferably conducted at a temperature in the range of from 80 to 250°C, more preferably 100 to 200°C, even more preferably 130 to 170°C, such as 140 to 160°C. The duration of the drying is preferably from 1 to 24 hours, more preferably from 5 to 20 hours. Before the drying, the particles are preferably washed. The washing medium preferably comprises distilled water. Furthermore, before drying (and after the optional washing), the particles are preferably drained.

In step (iii), heat treating the coated particles is preferably conducted at a temperature in the range of from 500 to 600°C. The duration of the heat treatment is preferably from 1 to 24 hours, more preferably from 2 to 10 hours. The heat treatment is preferably conducted in an oxygen-containing atmosphere.

In step (iv) the heat-treated particles are preferably mixed with LiOH. The molar ratio of Li to metals other than Li is preferably in the range of from 1 to 1.5, more preferably 1.05 to 1.4, even more preferably 1.1 to 1.35, still more preferably 1.20 to 1.25.

In step (v) heat treating the mixture obtained in step (iv) is preferably conducted at a temperature in the range of from 750 to 1050°C, more preferably 850 to 950°C. The heat treatment is preferably conducted for a duration of from 2 to 24 hours, more preferably from 3 to 12 hours. The heat treatment is preferably conducted in an oxygen-containing atmosphere.

In step (vi) (and thus also in step (n1)) the fluorine containing compound is preferably a fluorine containing polymer, more preferably polyvinylidene fluoride. The amount of the fluorine containing compound is preferably adjusted to correspond to 100 to 8000 ppm, preferably 100 to 5000 ppm, more preferably 150 to 4500 ppm by weight of fluorine relative to the weight of the product of step (iv).

In step (vii) (and thus also in step (n2)) heat treating the mixture obtained in step (vi) is preferably conducted at a temperature in the range of from 300 to 500°C, preferably 350 to 450°C. The heat treatment is preferably conducted for a duration of from 2 to 24 hours, preferably from 3 to 12 hours. The heat treatment is preferably conducted in an oxygen-containing atmosphere.

In step (viii) (and thus also in step (n1)) the product of step (vii) is preferably mixed with boric acid. The amount of boric acid or borate is preferably adjusted to correspond to 100 to 5000 ppm, preferably 100 to 3500 ppm, more preferably 100 to 3300 ppm by weight relative to the weight of the product of step (vii).

In step (ix) heat treating the mixture obtained in step (viii) is preferably conducted at a temperature in the range of from 300 to 500°C, preferably 350 to 450°C. The heat treatment is preferably conducted for a duration of from 2 to 24 hours, preferably from 3 to 12 hours. The heat treatment is preferably conducted in an oxygen-containing atmosphere.

### Lithium secondary battery

According to another aspect of the present invention, there is provided a positive electrode including a positive electrode current collector and a positive electrode active material layer formed on the positive electrode current collector. The positive electrode active material layer may include the lithium manganese-based oxide with a coating formed on at least a part of the surface according to various embodiments of the present invention described above as a positive electrode active material.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness in the range of from 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke, or copper or stainless steel whose surface is treated with carbon, nickel, titanium or silver, or an aluminum-cadmium alloy. In addition, the negative electrode current collector may generally have a thickness in the range of from 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂Ss-LiI, Li₂S-B₂S₃, Li₂S-P₂S₅-ZₘSₙ wherein, m and n are integers, and Z is Ge, Zn or Ga), Li₂S-GeS₂, Li₂S-SiS₂-Li₃PO₄, and Li₂S-SiS₂-LiₚMO_{q} wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

Preparation Example 1. Preparation of positive electrode active material

### Comparative Example 1

### (a) Preparation of precursor

An aqueous solution in which NiSO₄·6H₂O and MnSO₄·H₂O were mixed in a molar ratio of 40:60, NaOH, and NH₄OH were added to a reactor and stirred. The temperature inside the reactor was maintained at 45 °C, and a precursor synthesis reaction was performed while N₂ gas was introduced into the reactor. After the reaction was completed, washing and dehydration were performed, and a Ni_{0.4}Mn_{0.6}(OH)₂ precursor with an average particle diameter of 3.5 µm was obtained.

### (b) Coating of precursor

A NiSO₄·6H₂O aqueous solution, NaOH, and NH₄OH were added to the reactor in which the precursor obtained in step (a) was being stirred. At this time, NiSO₄·6H₂O was weighed to be 5 mol% relative to the Ni_{0.4}Mn_{0.6}(OH)₂ precursor and then additionally added to the reactor. After completing the reaction, the mixture was washed with distilled water, dehydrated, and dried at 150 °C for 14 hours to obtain a coated precursor.

### (c) First heat treatment

An oxide precursor was obtained by increasing the temperature of a furnace having an air atmosphere at a rate of 2 °C/min, heat-treating the precursor obtained in step (b) for 5 hours while maintaining the temperature at 550 °C, and then performing furnace cooling.

### (d) Second heat treatment

A mixture was prepared by mixing the oxide precursor obtained in step (c) with LiOH (Li/metal(metal excluding Li) molar ratio = 1.22) as a lithium raw material.

Subsequently, an overlithiated lithium manganese-based oxide was obtained by increasing the temperature of a furnace having an O₂ atmosphere at a rate of 2 °C/min, heat-treating the mixture for 8 hours while maintaining the temperature at 900 °C, and then performing furnace cooling.

### Reference Example 1

The lithium manganese-based oxide prepared in Comparative Example 1 and H₃BO₃ (weighed based on the input amount of H₃BO₃ as a raw material so that the boron content was 1,300 ppm relative to the total weight of the lithium manganese-based oxide) were mixed and heat-treated for 8 hours in the furnace after increasing the temperature to 400 °C at 4.4 °C per minute while maintaining an O₂ atmosphere, and then the mixture was classified and disintegrated to obtain a lithium manganese-based oxide with a boron-containing coating (containing lithium borate) formed on the surface.

### Reference Example 2

The lithium manganese-based oxide prepared in Comparative Example 1 and PVDF (weighed based on the input amount of PVDF as a raw material so that the fluorine content was 1,500 ppm relative to the total weight of the lithium manganese-based oxide) were mixed and heat-treated for 8 hours in the furnace after increasing the temperature to 400 °C at 4.4 °C per minute while maintaining an O₂ atmosphere, and then the mixture was classified and disintegrated to obtain a lithium manganese-based oxide with a fluorine-containing coating (containing lithium fluoride) formed on the surface.

### Example 1

The lithium manganese-based oxide prepared in Comparative Example 1 and PVDF (weighed based on the input amount of PVDF as a raw material so that the fluorine content was 1,500 ppm by weight relative to the total weight of the lithium manganese-based oxide) were mixed and heat-treated for 8 hours in the furnace after increasing the temperature to 400 °C at 4.4 °C per minute while maintaining an O₂ atmosphere to obtain a lithium manganese-based oxide with a fluorine-containing coating (containing lithium fluoride) formed on the surface.

Afterward, H₃BO₃ (weighed based on the input amount of H₃BO₃ as a raw material so that the boron content was 1,300 ppm relative to the total weight of the lithium manganese-based oxide) was added and heat-treated for 8 hours in the furnace after increasing the temperature to 400 °C at 4.4 °C per minute while maintaining an O₂ atmosphere, and then the mixture was classified and disintegrated to obtain a lithium manganese-based oxide with a coating containing fluorine and boron (containing lithium fluoride and lithium borate) formed on the surface.

### Example 2

The lithium manganese-based oxide prepared in Comparative Example 1 and H₃BO₃ (weighed based on the input amount of H₃BO₃ as a raw material so that the boron content was 1,300 ppm relative to the total weight of the lithium manganese-based oxide) were mixed and heat-treated for 8 hours in the furnace after increasing the temperature to 400 °C at 4.4 °C per minute while maintaining an O₂ atmosphere, thereby obtaining a lithium manganese-based oxide with a boron-containing coating (containing lithium borate) formed on the surface.

Afterward, PVDF (weighed based on the input amount of PVDF as a raw material so that the fluorine content was 1,500 ppm relative to the total weight of the lithium manganese-based oxide) was added and heat-treated for 8 hours in the furnace after increasing the temperature to 400 °C at 4.4 °C per minute while maintaining an O₂ atmosphere, and then the mixture was classified and disintegrated to obtain a lithium manganese-based oxide with a coating containing fluorine and boron (containing lithium fluoride and lithium borate) formed on the surface.

### Example 3

The lithium manganese-based oxide prepared in Comparative Example 1, PVDF (weighed based on the input amount of PVDF as a raw material so that the fluorine content was 1,500 ppm relative to the total weight of the lithium manganese-based oxide), and H₃BO₃ (weighed based on the input amount of H₃BO₃ as a raw material so that the boron content was 1,300 ppm relative to the total weight of the lithium manganese-based oxide) were mixed and heat-treated for 8 hours in the furnace after increasing the temperature to 400 °C at 4.4 °C per minute while maintaining an O₂ atmosphere, thereby obtaining a lithium manganese-based oxide with a coating containing fluorine and boron (containing lithium fluoride and lithium borate) formed on the surface.

### Example 4

A positive electrode active material was prepared in the same manner as in Example 3, except that 150 ppm of PVDF and 3,300 ppm of H₃BO₃ were used based on the input amount.

### Example 5

A positive electrode active material was prepared in the same manner as in Example 3, except that 4,500 ppm of PVDF and 100 ppm of H₃BO₃ were used based on the input amount.

### Comparative Example 2

A positive electrode active material was prepared in the same manner as in Example 3, except that 50 ppm of PVDF and 3,300 ppm of H₃BO₃ were used based on the input amount.

### Comparative Example 3

A positive electrode active material was prepared in the same manner as in Example 3, except that 4,500 ppm of PVDF and 50 ppm of H₃BO₃ were used based on the input amount.

### Preparation Example 2. Manufacture of lithium secondary battery (half-cell)

A positive electrode slurry was prepared by dispersing 90 wt% of each positive electrode active material prepared according to Preparation Example 1, 4.5 wt% of carbon black, and 5.5 wt% of a PVDF binder in N-methyl-2 pyrrolidone (NMP).

The positive electrode slurry was uniformly applied on an aluminum thin film with a thickness of 15 µm and vacuum-dried at 135 °C to manufacture a positive electrode for a lithium secondary battery in which a positive electrode active material layer is formed.

A half-cell was manufactured by using a lithium foil as a counter electrode to the positive electrode, a porous polyethylene membrane (Celgard 2300, thickness: 25 µm) as a separator, and an electrolyte in which LiPF₆ was present at a concentration of 1.15 M in a solvent including ethylene carbonate, dimethyl carbonate, and ethyl methyl carbonate mixed in a volume ratio of 2:4:4.

### Preparation Example 3. Manufacture of lithium secondary battery (full-cell)

A positive electrode slurry was prepared by dispersing 90 wt% of each positive electrode active material prepared according to Preparation Example 1, 4.5 wt% of carbon black, and 5.5 wt% of a PVDF binder in N-methyl-2 pyrrolidone (NMP).

The positive electrode slurry was uniformly applied on an aluminum thin film with a thickness of 15 µm and vacuum-dried at 135 °C to manufacture a positive electrode for a lithium secondary battery in which a positive electrode active material layer is formed.

A full-cell was manufactured by using a graphite electrode as a counter electrode to the positive electrode, a porous polyethylene membrane (Celgard 2300, thickness: 25 µm) as a separator, and an electrolyte in which LiPF₆ was present at a concentration of 1.15 M in a solvent including ethylene carbonate, dimethyl carbonate, and ethyl methyl carbonate mixed in a volume ratio of 2:4:4.

### Experimental Example 1. Coating composition analysis

Through the analysis of each positive electrode active material prepared according to Preparation Example 1 using an inductively coupled plasma-mass spectrometer (ICP-MS) and combustion ion chromatography (CIC), the contents of fluorine and boron in the positive electrode active materials according to Examples 1 to 5, Reference Examples 1 and 2, and Comparative Examples 1 to 3 were measured. The measurement results are shown in Table 1 below.

**[Table 1]**

| Classification | Fluorine | Boron | Fluorine (ppm):boron (ppm) |
|---|---|---|---|
| Units | ppm | ppm | - |
| Example 1 | 1,100 | 1,300 | 1:1.2 |
| Example 2 | 1,100 | 1,300 | 1:1.2 |
| Example 3 | 1,100 | 1,300 | 1:1.2 |
| Example 4 | 150 | 3,000 | 1:25 |
| Example 5 | 3,500 | 100 | 1:0.03 |
| Reference Example 1 | 0 | 1,300 | - |
| Reference Example 2 | 1,100 | 0 | - |
| Comparative Example 1 | 0 | 0 | - |
| Comparative Example 2 | less than 100 | 2,500 | Not measurable |
| Comparative Example 3 | 3,500 | less than 100 | Not measurable |

### Experimental Example 2. Evaluation of electrochemical properties of lithium secondary battery (half-cell)

For the lithium secondary batteries (half-cell) manufactured in Preparation Example 2, charge/discharge experiments were conducted using an electrochemical analysis device (Toscat-3100 from TOYO SYSTEM CO., LTD.) at 25 °C, a voltage ranging from 2.0 V to 4.6 V, and a discharge rate of 0.1 C to 2.0 C to measure initial charge capacity, initial discharge capacity, initial reversible efficiency, and rate performance (discharge capacity rate; rate capability (C-rate)).

The measurement results are shown in Table 2 below.

**[Table 2]**

| Classification | Initial charge capacity (0.1 C-rate) | Initial discharge capacity (0.1 C-rate) | Initial efficiency | 2.0 C discharge capacity rate |
|---|---|---|---|---|
| | mAh/g | mAh/g | % | % |
| Example 1 | 243.8 | 222.8 | 91.4 | 82.2 |
| Example 2 | 246.1 | 224.3 | 91.1 | 82.1 |
| Example 3 | 245.7 | 224.8 | 91.0 | 82.2 |
| Example 4 | 243.9 | 222.7 | 91.1 | 81.8 |
| Example 5 | 244.1 | 222.2 | 90.7 | 81.7 |
| Reference Example 1 | 244.6 | 222.3 | 90.9 | 81.0 |
| Reference Example 2 | 247.2 | 222.8 | 90.1 | 80.5 |
| Comparative Example 1 | 244.0 | 218.0 | 89.4 | 77.8 |
| Comparative Example 2 | 242.0 | 220.6 | 91.2 | 80.9 |
| Comparative Example 3 | 242.4 | 217.5 | 89.7 | 80.6 |

Referring to the results of Comparative Example 1, Reference Example 1 and Reference Example 2 in Table 2, it can be seen that when a fluorine-containing coating or a boron-containing coating is formed on the surface of the lithium manganese-based oxide, the initial capacity and initial efficiency are slightly improved.

On the other hand, when a coating in which fluorine and boron are present in a predetermined weight ratio is formed on the surface of the lithium manganese-based oxide, the initial capacity, initial efficiency, and rate performance are all significantly improved compared to Comparative Example 1.

### Experimental Example 3. Evaluation of electrochemical properties of lithium secondary battery (full-cell)

For the lithium secondary batteries (full-cell) manufactured in Preparation Example 3, after completing the 6-cycle formation process using an electrochemical analysis device (Toscat-3100 from TOYO SYSTEM CO., LTD.) under the conditions of 25 °C, a voltage range of 2.0 V to 4.6 V, and 0.2 C/0.2 C, charging/discharging was performed 500 times under the conditions of 25 °C, a voltage range of 2.0 V to 4.6 V, and 1 C/1 C. The initial (1^{st} cycle) discharge capacity and the ratio of the discharge capacity at the 500^{th} cycle to the initial discharge capacity (cycle capacity retention) were measured.

The measurement results are shown in Table 3 below.

**[Table 3]**

| Classification | Initial discharge capacity (mAh/g) | 500^{th} cycle capacity retention (%) |
|---|---|---|
| Example 1 | 215.6 | 89.4 |
| Example 2 | 217.4 | 84.8 |
| Example 3 | 216.5 | 82.5 |
| Reference Example 1 | 216.5 | 78.1 |
| Reference Example 2 | 217.5 | 29.8 |
| Comparative Example 1 | 208.5 | 49.0 |

Referring to the results in Table 3, it can be seen that the long-term lifetime characteristics of the full-cell using Comparative Example 1 in which a coating containing fluorine and/or boron is not formed on the surface of the lithium manganese-based oxide as a positive electrode active material drastically decrease. It can be expected that the transition metal eluted from the lithium manganese-based oxide causes a resistance anomaly in a negative electrode, and due to the resistance anomaly, the lifetime of the full-cell is drastically reduced.

In addition, it can be confirmed that compared to the case where only the fluorine is present on the surface of the lithium manganese-based oxide, when a coating in which fluorine and boron are present in a predetermined weight ratio on the surface of the lithium manganese-based oxide is formed, the long-term lifetime characteristics may be improved.

According to the present invention, it is possible to overcome the limitations of existing overlithiated lithium manganese-based oxide, which has several disadvantages in terms of electrochemical properties and/or stability compared to a commercially available ternary lithium composite oxide with a nickel-cobalt-manganese (NCM) or nickel-cobalt-aluminum (NCA) composition.

Specifically, according to the present invention, it is possible to improve discharge capacity and charge/discharge efficiency reduced by lithium and manganese present in excess in the lithium manganese-based oxide by forming a coating including fluorine and boron on at least a part of the surface of the lithium manganese-based oxide.

Thus, it is possible to provide a lithium secondary battery, which prevents a decrease in rate performance and capacity due to lithium and manganese present in excess in an existing OLO by using the lithium manganese-based oxide according to the present invention as a positive electrode active material and in particular, achieves high stability by reducing the side reactions between the positive electrode active material and an electrolyte under a high voltage storage or operating condition.

In addition to the above-described effects, specific effects of the present invention will be described while explaining specific details for carrying out the present invention above.

Although the embodiments of the present invention have been described, those skilled in the art can modify and change the present invention in various ways by changing, deleting, or adding components without departing from the spirit of the present invention as set forth in the claims, which will also be included within the scope of the rights of the present invention.

## Claims

1. A positive electrode active material, comprising:
a lithium manganese-based oxide in which a phase belonging to a C2/m space group and a phase belonging to a R3-m space group are present; and
a coating formed on at least a part of the surface of the lithium manganese-based oxide,
wherein the coating includes fluorine and boron.

2. The positive electrode active material of claim 1, wherein the fluorine is present in an amount of more than 100 ppm and 3,500 ppm by weight or less based on the total weight of the positive electrode active material.

3. The positive electrode active material of claim 1 or 2, wherein the coating includes LiF.

4. The positive electrode active material of any one of claims 1 to 3, wherein the lithium manganese-based oxide is present as secondary particles in which a plurality of primary particles are aggregated, and
there is a gradient in which the concentration of fluorine, expressed as weight by volume, decreases from the surface region of the secondary particle to the center of the secondary particle.

5. The positive electrode active material of any one of claims 1 to 4, wherein the coating further includes carbon, and/or
wherein the coating includes a carbonaceous matrix, and LiF is dispersed in the carbonaceous matrix.

6. The positive electrode active material of any one of claims 1 to 5, wherein the coating includes at least one boron-containing compound selected from B₂O₃, H_{α}B_{β}O_{γ} (0<α<10, 0<β<10, 0<γ<20), and Li(_{α'}B_{β'}O_{γ'} (0<α'<10, 0<β'<10, 0<y'<20).

7. The positive electrode active material of any one of claims 1 to 6, wherein the boron is present in an amount of more than 50 ppm and 3,000 ppm by weight or less based on the total weight of the positive electrode active material.

8. The positive electrode active material of any one of claims 1 to 7, wherein the coating includes one or more coating layers and at least one of the coating layers contains both fluorine and boron.

9. The positive electrode active material of any one of claims 1 to 7, wherein the coating includes:
(1) a first coating layer formed on at least a part of the surface of the lithium manganese-based oxide and including fluorine; and
(2) a second coating layer formed on at least a part of the surface of the first coating layer and including boron, or
(1) a first coating layer formed on at least a part of the surface of the lithium manganese-based oxide and including boron; and
(2) a second coating layer formed on at least a part of the surface of the first coating layer and including fluorine.

10. The positive electrode active material of any one of claims 1 to 9, wherein the ratio of the weight of the fluorine and boron relative to the total weight of the positive electrode active material is in the range of from 1:0.03 to 1:25.

11. The positive electrode active material of any one of claims 1 to 10, wherein the average particle diameter of the lithium manganese-based oxide is in the range of from 0.5 µm to 15 µm.

12. The positive electrode active material of any one of claims 1 to 11, wherein the lithium manganese-based oxide is represented by Chemical Formula 1 below,
[Chemical Formula 1] Li(LiₐM1ₓM2_{y})O_{2-b}X_{b}
wherein,
M1 is at least one selected from Ni and Mn,
M2 is at least one selected from Ni, Mn, Co, Al, P, Nb, B, Si, Ti, Zr, Ba, K, Mo, Si, Fe, Cu, Cr, Zn, Na, Ca, Mg, Pt, Au, Eu, Sm, W, Ce, V, Ta, Sn, Hf, Ce, Gd, Y, Ru, Ge, and Nd, wherein M2 does not overlap M1,
X is a halogen optionally substituting some of the oxygen present in the lithium manganese-based oxide, and
0<a≤0.7, 0≤b≤0.1, 0<x≤1, 0≤y<1, 0<x+y≤1);

13. The positive electrode active material of any one of claims 1 to 11, wherein the lithium manganese-based oxide is represented by Chemical Formula 1-1 below,
[Chemical Formula 1-1] rLi₂MnO_{3-c}X'_{c}·(1-r)Li_{a'}M1ₓM2_{y'}O_{2-b}X_{b'}
wherein,
M1 is at least one selected from Ni and Mn,
M2 is at least one selected from Ni, Mn, Co, Al, P, Nb, B, Si, Ti, Zr, Ba, K, Mo, Si, Fe, Cu, Cr, Zn, Na, Ca, Mg, Pt, Au, Eu, Sm, W, Ce, V, Ta, Sn, Hf, Ce, Gd, Y, Ru, Ge, and Nd, wherein M2 does not overlap M1,
X and X' each are independently halogens optionally substituting some of the oxygen present in the lithium manganese-based oxide, and
0<r≤0.7, 0≤c≤0.1, 0<a'≤1, 0≤b'≤0.1, 0<x'≤1, 0≤y'≤1, 0<x'+y'≤1).

14. A positive electrode comprising the positive electrode active material according to any one of claims 1 to 13.

15. A lithium secondary battery comprising the positive electrode of claim 14, a negative electrode, a separator interposed between the positive electrode and the negative electrode, and an electrolyte.
